# EUROPÄISCHE PATENTSCHRIFT

(11) **EP 0 673 823 B1**
(45) Veröffentlichungstag und Bekanntmachung des Hinweises auf die Patenterteilung: **04.02.1998**
(21) Anmeldenummer: 95103642.5
(22) Anmeldetag: 14.03.1995
(51) Int. Cl.: B62B 3/10

(54) **Gitterrost zur Bildung eines konischen Korbes**
Grating for the construction of a conical basket
Grille pour la construction d'un panier conique

(30) Priorität: 24.03.1994 DE 4410265
(43) Veröffentlichungstag der Anmeldung: 27.09.1995
(73) Patentinhaber: Wanzl GmbH & Co. Entwicklungs-KG, D-89336 Leipheim (DE)
(72) Erfinder: Wanzl, Rudolf, D-89340 Leipheim (DE)

(56) Entgegenhaltungen:
- EP-A- 0 051 410
- DE-U- 9 305 333
- US-A- 3 353 836
- US-A- 3 751 059

## Beschreibung

Die Erfindung betrifft einen konischen Korb für einen Einkaufswagen, der einen gebogenen, aus Längs- und Querdrähten hergestellten Gitterrost aufweist, wobei die Rückwand des Korbes durch eine in das Korbinnere schwenkbare Klappe und die gegenüberliegende Vorderseite des Korbes durch ein Abschlußstück gebildet sind und der Gitterrost in montiertem Zustand zwischen dem Abschlußstück und der Klappe angeordnet ist.

Das deutsche Gebrauchsmuster G 93 05 333.9 beschreibt einen Einkaufswagen, dessen Korb aus einem Abschlußstück, einem als Tragabschnitt bezeichneten gebogenen Gitterrost und aus einer schwenkbaren Rückwand besteht. Die praktische Umsetzung dieses Gebrauchsmusters zu einem Einkaufswagen ließ einen Gitterrost entstehen, dessen Zuschnitt so gestaltet war, daß acht Seiten beschnitten werden mußten, bevor der Zuschnitt zu einem Tragabschnitt gebogen werden konnte. Acht Seiten zu beschneiden bedeutet einen enormen Fertigungsaufwand, den es zu reduzieren gilt.

Die Aufgabe der Erfindung besteht darin, einen konischen Korb der gattungsgemäßen Art so weiterzuentwickeln und zu gestalten, daß an dessen Gitterrost weniger als acht Seiten beschnitten werden müssen.

Die Lösung der Aufgabe besteht darin, daß der Zuschnitt des Gitterrostes trapezförmig gestaltet ist.

Es ist von äußerstem Vorteil, daß beim Gitterrost des erfindungsgemäßen konischen Korbes nur noch vier Seiten beschnitten werden müssen. Dies bedeutet eine Halbierung der erforderlichen Schneidearbeitsgänge und dadurch eine erhebliche Kostenersparnis.

Die Erfindung wird anhand eines Ausführungsbeispieles näher erläutert. Es zeigt
Fig. 1 den Zuschnitt eines Gitterrostes;
Fig. 2 den Gitterrost in gebogenem Zustand sowie
Fig. 3 einen Einkaufswagen mit einem Gitterrost.

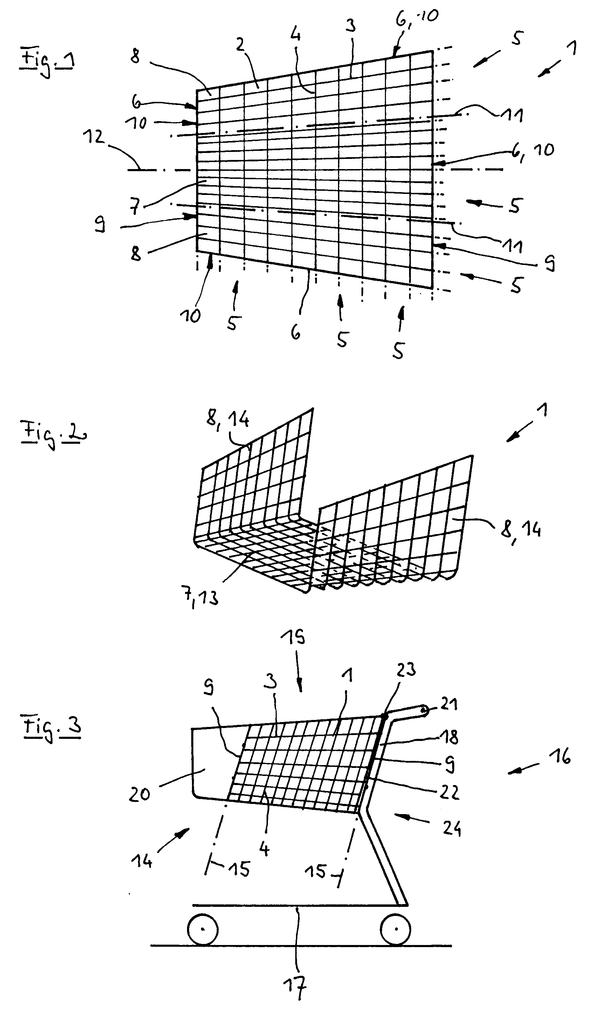

Der in Fig. 1 dargestellte ebenflächige Zuschnitt 2 eines Gitterrostes 1 besteht aus Längs- und Querdrähten 3, 4, die an ihren Kreuzungspunkten verschweißt sind. Der Grundriß des Zuschnittes 2 ist trapezförmig. Die Längsdrähte 3 sind strahlenförmig angeordnet, während die Querdrähte 4 parallel verlaufen. Der Zuschnitt 2 weist aufgrund seiner Trapezform lediglich vier Seiten 6 auf, die mit einer Schneidemaschine beschnitten werden müssen. Das Beschneiden ist notwendig, da man den Gitterrost 1 aus mehreren Gruppen 5 von Drähten unterschiedlicher Länge herstellt. An zwei Seiten 6 des Zuschnittes 2 sind strichpunktiert die Gruppen 5 gleich langer Drähte eingezeichnet, um die Herstellungsweise des Gitterrostes 1 besser beschreiben zu können. Die Umrisse des Zuschnittes 2 sind stärker gezeichnet, um die vier senkrechten Schnittebenen 10 zu zeigen. Im mittleren Bereich 7 des Zuschnittes 2 sind die Längsdrähte 3 bevorzugt enger gesetzt, als in den beiden äußeren Bereichen 8. Die Biegekanten 11 sind, um einen gebogenen Gitterrost 1 gemäß Fig. 2 herstellen zu können, winklig und spiegelbildlich zur Längshauptachse 12 angeordnet. Ihre Lage ist so gewählt, daß die beiden parallelen Seiten 9 des Zuschnittes 2 auch nach dem Abbiegen noch parallel verlaufen, so wie dies aus Fig. 3 ersichtlich ist.

Fig. 2 zeigt den Gitterrost 1 in einer räumlicher Darstellung. Der mittlere Bereich 7 bildet den Boden 13, während die beiden äußeren Bereiche 8 die Seitenwände 14 des Gitterrostes 1 bilden. Man erkennt, daß der U-förmige Gitterrost 1 eine konische Gestalt aufweist. Diese ist notwendig, um mit Hilfe des Gitterrostes 1 einen Korb 19 entstehen zu lassen, in den sich in bekannter Weise der Korb 19 eines weiteren Einkaufswagens 16 platzsparend einschieben läßt.

Fig. 3 zeigt einen gängigen Einkaufswagen 16, der ein Fahrgestell 17 aufweist, das einen Korb 19 trägt. Eine Schiebeeinrichtung 21 dient zum Schieben oder Ziehen des Einkaufswagens 16. Sowohl der Korb 19, als auch das Fahrgestell 17 sind in bekannter Weise so gestaltet, daß sich gleiche Einkaufswagen 16 platzsparend ineinanderschieben lassen. der Korb 19 wird durch den Gitterrost 1, durch ein vorderendig an den Gitterrost 1 sich anschließendes Abschlußstück 20 und rückseitig durch eine Klappe 22 gebildet, die um eine horizontale Schwenkachse 23 drehbar entweder an den beiden Seitenwänden 14 des Gitterrostes 1 oder an zwei vom Fahrgestell 17 nach oben gerichteten Trägern 18 gelagert ist. Die Klappe 22 verschließt in bekannter Weise das rückwärtige Ende 24 des Korbes 19 und läßt sich zum Zwecke des Ineinanderschiebens mehrerer Einkaufswagen 16 in das Korbinnere verschwenken. In der Zeichnung erkennt man, daß die beiden parallelen Seiten 9 des Zuschnittes 2 beim gebogenen Gitterrost 1 auf zwei parallelen, gegenüber einer Vertikalen leicht geneigten Ebene 15 angeordnet sind. Der Gitterrost 1, das Abschlußstück 20 sowie die Träger 18 des Fahrgestelles 17 weisen nicht näher bezeichnete Mittel auf, die ein ortsfestes Zusammenfügen des Abschlußstückes 20 mit dem Gitterrost 1 und ein ebenfalls ortsfestes Zusammenfügen des Gitterrostes 1 mit den Trägern 18 erlauben.

## Patentansprüche

1. Konischer Korb (19) für einen Einkaufswagen (16), der einen gebogenen, aus Längs- und Querdrähten (3, 4) hergestellten Gitterrost (1) aufweist, wobei die Rückwand des Korbes (19) durch eine in das Korbinnere schwenkbare Klappe (22) und die gegenüberliegende Vorderseite des Korbes (19) durch ein Abschlußstück (20) gebildet sind und der Gitterrost (1) in montiertem Zustand zwischen dem Abschlußstück (20) und der Klappe (22) angeordnet ist, dadurch **gekennzeichnet,** daß der Zuschnitt (2) des Gitterrostes (1) trapezförmig gestaltet ist.

2. Konischer Korb (19) nach Anspruch 1, dadurch **gekennzeichnet,** daß die Längsdrähte (3) strahlenförmig und die Querdrähte (4) parallel angeordnet sind.

3. Konischer Korb (19) nach Anspruch 1 oder 2, dadurch **gekennzeichnet,** daß die im mittleren Bereich (7) des Zuschnittes (2) befindlichen Längsdrähte (3) enger gesetzt sind als die in den äußeren Bereichen (8) befindlichen Längsdrähte (3).

4. Konischer Korb (19) nach einem der Ansprüche 1 bis 3, dadurch **gekennzeichnet,** daß die Lage der Biegekanten (11) so gewählt ist, daß die parallelen Seiten (9) des Zuschnittes (2) in gebogenem Zustand des Gitterrostes (1) auf parallelen Ebenen (15) angeordnet sind.

## Claims

1. A tapered basket (19) for a shopping trolley (16), having a bent grating (1) manufactured from longitudinal and transverse wires (3, 4), the rear wall of the basket (19) being formed by a flap (22) pivotable into the basket interior and the facing front face of the basket (19) being formed by an end pan (20), and the grating (1) being arranged between the end part (20) and the flap (22) when mounted, characterised in that the blank (2) of the grating (1) is trapezoidal.

2. A tapered basket (19) in accordance with Claim 1, characterised in that the longitudinal wires (3) are radially arranged and the transverse wires (4) are arranged so as to be parallel.

3. A tapered basket (19) in accordance with Claim 1 or 2, characterised in that the longitudinal wires (3) located in the central region (7) of the blank (2) are placed closer together than the longitudinal wires (3) located in the outer regions (8).

4. A tapered basket (19) in accordance with any one of Claims 1 to 3, characterised in that the position of the bending edges (11) is selected in such a manner that the parallel sides (9) of the blank (2) are arranged on parallel planes (15) when the grating (1) is in the bent state.

## Revendications

1. Panier conique (19) pour un chariot à provisions (16) présentant une grille (1) constituée de fils longitudinaux et de fils transversaux (3, 4), la paroi arrière du panier (19) étant formée par un abattant (22) pivotant à l'intérieur du panier et le côté avant du panier (19), situé à l'opposé, étant formé par une pièce de raccordement (20), et la grille (1), à l'état monté, étant disposée entre la pièce de raccordement (20) et l'abattant (22), **caractérisé en ce que** la pièce découpée (2) formant la grille (1) est trapézoïdale.

2. Panier conique (19) selon la revendication 1, **caractérisé en ce que** les fils longitudinaux (3) sont disposés en faisceaux et les fils transversaux (4) sont parallèles.

3. Panier conique (19) selon la revendication 1 ou 2, **caractérisé en ce que** les fils longitudinaux (3) situés dans la partie centrale (7) de la pièce découpée (2) sont plus serrés que les fils longitudinaux (3) situés dans les parties extérieures (8).

4. Panier conique (19) selon l'une des revendications 1 à 3, **caractérisé en ce que** la position des bords cintrés (11) est sélectionnée de façon à ce que les côtés parallèles (9) de la pièce découpée (2) sont disposés dans des plans parallèles (15) lorsque la grille (1) est cintrée.
